Europäisches Patentamt

European Patent Office

Office européen des brevets

(19)

(11) Veröffentlichungsnummer: **0 025 561**
**A1**

## (12) EUROPÄISCHE PATENTANMELDUNG

(21) Anmeldenummer: **80105273.9**

(22) Anmeldetag: **04.09.80**

(51) Int. Cl.³: **C 08 F 259/04, C 08 F 14/06**

(30) Priorität: **14.09.79 DE 2937223**

(43) Veröffentlichungstag der Anmeldung: **25.03.81**
**Patentblatt 81/12**

(84) Benannte Vertragsstaaten: **AT BE CH DE FR GB IT LI LU NL SE**

(71) Anmelder: **BASF Aktiengesellschaft, Carl-Bosch-Strasse 38, D-6700 Ludwigshafen (DE)**

(72) Erfinder: **Pyrlik, Manfred, Dr., Berner Weg 34, D-6700 Ludwigshafen (DE)**

(54) **Verfahren zur diskontinuierlichen Polymerisation von Vinylchlorid in Emulsion.**

(57) Die Erfindung betrifft ein Verfahren zur diskontinuierlichen Polymerisation von Vinylchlorid oder damit copolymerisierbaren Monomeren in Emulsion. Hierbei ist wesentlich, daß die Polymerisation in Gegenwart von zwei in Emulsion hergestellten Saatlatices unterschiedlicher Teilchengröße und unterschiedlichem Gewichtsanteil, bezogen auf das angewendete Monomere, durchgeführt wird. Der eine Saatlatex soll Teilchen mit einem mittleren Durchmesser im Bereich von 0,12 bis 0,6 $\mu$ aufweisen und in einem Anteil von 0,5 bis 5 Gew.%, bezogen auf Monomeres, zugegen sein. Der andere Saatlatex soll einen mittleren Teilchendurchmesser im Bereich von 0,02 bis 0,08 $\mu$ aufweisen und in einem Anteil von 0,05 bis 0,5 Gew.%, bezogen auf Monomeres, vorhanden sein.

Durch das erfindungsgemäße Verfahren lassen sich in Emulsion PVC Latices herstellen, die durch Sprühtrocknung zu Pasten-PVC verarbeitet werden können. Die Erfindung ermöglicht niedrigviskose Pasten im Bereich hoher Schergefälle darzustellen.

Verfahren zur diskontinuierlichen Polymerisation von Vinylchlorid in Emulsion

---

Die Erfindung betrifft ein Verfahren zur Herstellung von Pasten-PVC auf Basis diskontinuierlicher Emulsionspolymerisation unter Verwendung von 2 in Emulsion hergestellten Latices unterschiedlicher mittlerer Teilchengröße als Saat.

Pasten-PVC wird üblicherweise durch Sprühtrocknung von PVC-Latices hergestellt. An die vom Verarbeiter durch Abmischung des PVC-Pulvers mit Weichmacher und gegebenenfalls Hilfsstoffen zubereitete PVC-Paste werden Anforderungen gestellt, die weitgehend vom Verarbeitungsverfahren bestimmt werden. Bei dem wichtigsten Verarbeitungsprozeß, dem Streichen, wird in erster Linie eine möglichst niedrige Viskosität der Paste bei hohen Schergefällen verlangt, um hohe Verarbeitungsgeschwindigkeiten realisieren zu können. Pasten mit dilatantem Fließverhalten, bei denen die Viskosität mit steigendem Schergefälle zunimmt, sind hierfür ungeeignet.

Bei gegebener Verarbeitungsrezeptur wird das Fließverhalten der Paste entscheidend von den Eigenschaften des PVC-Pulvers bestimmt. Hier wiederum ist - neben anderen Parametern wie z.B. den Trocknungsbedingungen - die Primär- oder Latex-Teilchengrößenverteilung von entscheidendem Einfluß auf

Vo/BL

0025561

die Pastenviskosität im verarbeitungsgemäßen Bereich höherer Schergefälle. Der Pasten-PVC-Hersteller muß also den Polymerisationsprozeß so führen, daß der nach der Beendigung der Polymerisation erhaltene Latex eine Teilchengrößenverteilung (TGV) aufweist, die eine möglichst niedrige Pastenviskosität bei höheren Schergefällen gewährleistet. Darüber hinaus wird er bestrebt sein, im Falle der absatzweisen (diskontinuierlichen) Polymerisation die Schwankungen in der Latex-TGV möglichst gering zu halten. Zur Erhöhung der Wirtschaftlichkeit des Herstellverfahrens wird er versuchen, einen möglichst hohen Feststoffgehalt des erhaltenen Latex zu erzielen, um Trocknungskosten zu sparen. Der beliebigen Erhöhung des Feststoffgehaltes sind jedoch durch die vermehrte Bildung von Koagulat, Wandbelägen im Polymerisationsbehälter usw. Grenzen gesetzt.

Es hat sich nun gezeigt, daß es zur Erzielung möglichst niedriger Viskositäten bei hohen Schergefällen bzw. zur Vermeidung dilatanten Fließverhaltens sinnvoll ist, Polymer-Latices zu verwenden, die aus Teilchen unterschiedlicher Durchmesser bestehen, also nicht monodispers verteilt sind. Geeignete Latices können z.B. eine breite, kontinuierliche TGV aufweisen oder aber aus zwei oder mehr Teilchenklassen unterschiedlicher Größen bestehen.

Es existiert eine Reihe von Verfahren, mit denen nicht-monodisperse Latices hergestellt werden können. Bei der kontinuierlichen Emulsionspolymerisation erhält man einen Latex mit kontinuierlicher, sehr breiter TGV (etwa 0,03 bis 1,5 µm), dessen relativer Anteil an kleinen Teilchen sehr hoch ist. Es lassen sich hohe Feststoffgehalte der Latices erzielen (ca. 50 %) und die Eigenschaftskonstanz der Produkte ist gut. Die sich ergebende Latex-TGV führt jedoch zu unbefriedigend hohen Viskositäten

bei niedrigen Schergefällen sowie zu einer ungenügenden Alterungsstabilität der daraus hergestellten Pasten.

Bei der Mikrosuspensionspolymerisation, die absatzweise durchgeführt wird, entstehen ebenfalls Latices mit kontinuierlicher TGV, deren Breite jedoch geringer ist als bei der vorgenannten kontinuierlichen Fahrweise (etwa 0,3 bis 1,5 u). Die erzielbaren Feststoffgehalte sind kleiner als bei der vorgenannten kontinuierlichen Fahrweise (ca. 40 %) und auch die Konstanz wichtiger Qualitätsmerkmale ist längst nicht so gut wie dort. Bei Verwendung geeigneter Emulgatoren können aus nach diesem Verfahren hergestelltem PVC-Pulver Pasten mit sehr niedrigen Viskositäten bei niedrigen Schergefällen hergestellt werden, die jedoch vor allem bei den von vielen Verarbeitern gewünschten niedrigen Weichmachergehalten dilatantes Fließverhalten bei höheren Schergefällen zeigen und daher für die Anwendung des Streichverfahrens weniger gut geeignet sind.

Bei der diskontinuierlichen Emulsionspolymerisation werden normalerweise Latices mit enger TGV erhalten, und zwar sowohl bei der Verfahrensweise ohne Vorlage von Saatlatex, vgl. (5), als auch mit Saatlatex, vgl. (6). Nach diesen Verfahren hergestellte Produkte weisen unbefriedigend hohe Pastenviskositäten bei höheren Schergefällen auf.

Es sind auch einige Verfahren bekannt, mittels diskontinuierlicher Emulsionspolymerisation nicht-monodisperse Latices zu erhalten. Hierzu nennen wir insbesondere (1) bis (3):

(1)  GB-PS 753 832
(2)  DE-PS 842 119
(3)  DE-PS 889 835
(4)  GB-PS 928 556
(5)  GB-PS 699 016
(6)  DE-PS 843 163

Die meisten dieser Verfahren, für die (1) bis (3) als Beispiele genannt seien, benutzen die bei jeder Emulsionspolymerisation anwesenden oberflächenaktiven Substanzen zur Beeinflussung der TGV, indem z.B. ein bestimmter Bedeckungsgrad der Latexteilchen mit Emulgator eingehalten werden muß (1) oder Emulgatorsysteme verwendet werden, die ein relativ schwaches Stabilisierungsvermögen aufweisen und durch teilweise Agglomeration eine Teilchenvergrößerung bzw. Verbreiterung der TGV herbeiführen (2, 3). Alle diese Verfahren weisen einen oder mehrere der folgenden Nachteile auf:

- Es können nur ganz bestimmte Emulgatoren oder Emulgatorkombinationen verwendet werden.

- Die Reproduzierbarkeit der TGV und damit wichtiger Produkteigenschaften ist unbefriedigend.

- Der Feststoffgehalt des wäßrigen Latex ist – Abwesenheit von Koagulat etc. vorausgesetzt – verhältnismäßig gering.

- Das Fließvermögen der aus den Produkten hergestellten weichmacherarmen Paste ist bei hohen Schergefällen unbefriedigend.

Das in (4) beschriebene Verfahren geht von dem Gedanken aus, die Polydispersität durch Teilchen unterschiedlichen Durchmessers im Saat-Latex zu erzielen. Die Anwendung der in den Beispielen genannten Teilchengrößen und Mengenverhältnisse führt jedoch zu sehr niedrigen Feststoffgehalten der auspolymerisierten Latices von 35 bis 40 %; die so hergestellten Produkte ergeben Pasten mit unbefriedigend hohen Viskositäten bei höheren Schergefällen.

Es bestand daher die Aufgabe ein Verfahren vorzuschlagen, das die Herstellung eines koagulat- und wandbelagsfreien PVC-Latex mit hohem Feststoffgehalt ermöglicht, aus dem

0025561

durch Spühtrocknung ein Pasten-PVC erhalten wird, das die Herstellung niedrigviskoser Pasten vor allem im Bereich höherer Schergefälle ermöglicht. Diese Aufgabe wird durch das erfindungsgemäße Verfahren gelöst.

Die Erfindung betrifft daher ein Verfahren zur diskontinuierlichen Polymerisation von Vinylchlorid oder Mischungen von Vinychlorid mit bis zu 30 Gew.% an copolymerisierbaren Monomeren in Emulsion unter Verwendung von

a)     mindestens einem wasserlöslichen Starter
b)     mindestens einem Emulgator und gegebenenfalls
c)     weiteren Polymerisationshilfsstoffen und in Anwesenheit
d)     eines durch Emulsionspolymerisation erzeugten PVC--Saatlatex, der Teilchen mit einem mittleren Durchmesser im Bereich von 0,12 bis 0,6 $\mu$m aufweist.

Das Verfahren ist dadurch gekennzeichnet, daß die Polymerisation in Gegenwart eines weiteren, in Emulsion erzeugten Saatlatex e) durchgeführt wird, der in einem Anteil von 0,05 bis 0,5 %, bezogen auf Monomere(s), zugegen ist und einen mittleren Teilchendurchmesser im Bereich von 0,02 bis 0,08 $\mu$m ($d_{50}$-Wert der Masseverteilung) aufweist und wobei der Saatlatex d) in einem Anteil von 0,5 bis 5 %, bezogen auf Monomere(s), angewendet wird und einen mittleren Teilchendurchmesser im Bereich von 0,20 bis 0,40 $\mu$m ($d_{50}$-Wert der Masserverteilung) aufweist.

Das erfindungsgemäße Verfahren ergibt einen PVC-Latex mit bimodaler TGV; der Latex weist große Teilchen im Bereich 0,6 bis 1,3 $\mu$m, insbesondere 0,8 bis 1,0 $\mu$ des mittleren Durchmessers ($d_{50}$-Wert der Masseverteilung) auf und enthält außerdem einen Anteil kleiner Teilchen mit einem mittleren Durchmesser ($d_{50}$-Wert der Masseverteilung) im Bereich von 0,08 bis 0,4, insbesondere von 0,2 bis 0,3 u. Das Gewichtsverhältnis beider Anteile groß/klein beträgt 1,5:1 bis 6:1 und vorzugsweise 2:1 bis 4:1. Die Latices können mit allen bekannten für die Pastenherstellung geeigneten Emulgatoren weitgehend koagulatfrei mit Feststoffgehalten hergestellt werden, wie sie sonst nur bei der kontinuierlichen Emulsionspolymerisation üblich sind. Die Reproduzierbarkeit ist für ein absatzweises Verfahren hervorragend.

Die Fließeigenschaften der aus dem erfindungsgemäß hergestellten Pasten PVC zubereiteten Pasten sind bei hohen Schergefällen eher noch besser als die hier ohnehin schon guten kontinuierlich polymerisierten PVC-Typen, ohne jedoch deren Nachteile, hohe Viskosität bei niedrigen Schergefällen und schlechte Alterungsstabilität, aufzuweisen.

Das erfindungsgemäße Verfahren wird diskontinuierlich durchgeführt. Für die Polymerisation kommen als Monomere Vinychlorid oder Mischungen von Vinychlorid mit damit copolymerisierbaren Monomeren in Betracht. Dabei können die Monomerenmischungen bis zu 30 Gew.%, vorzugsweise bis 15 Gew.%, bezogen auf die Monomerenmischung, der copolymerisierbaren Monomeren enthalten.

Als copolymerisierbare Monomere kommen in Betracht: Vinylidenchlorid, Vinylester, wie Vinylacetat oder Vinylpropionat, Vinyläther, Acrylester, Acrylnitril oder Olefine wie Äthylen oder Propylen, ungesättigte Dicarbonsäuren, gegebenenfalls teilweise oder ganz verestert, wie Maleinsäure, Fumarsäure, Itaconsäure, Maleinsäuremonomethylester oder Maleinsäuredibutylester und dgl.

Der für das erfindungsgemäße Verfahren benötigte Saat-Latex wird in an sich bekannter Weise durch diskontinuierliche Emulsionspolymerisation hergestellt. Dabei

ist es belanglos, ob die bimodale TGV des Saat-Latex durch entsprechendes Abmischen zweier getrennt polymerisierter PVC-Latices, von denen jeder für sich eine relativ enge TGV aufweist, eingestellt wird, oder durch Polymerisieren in einem einzigen Ansatz, wobei durch geeignete Steuerung des Prozesses dafür gesorgt werden muß, daß auch tatsächlich die gewünschte bimodale TGV entsteht. Dies könnte z.B. dadurch geschehen, daß man nicht die Gesamtmenge des benötigten Emulgators zu Beginn der Polymerisation vorlegt, sondern nur einen geringen Teil, und den Rest kontinuierlich oder portionsweise, über die Polymerisationsdauer verteilt, zugibt. Die zu Beginn vorgelegte geringe Emulgatormenge richtet sich nach dem für die größere Teilchenklasse gewünschten Durchmesser und kann vom Fachmann durch einige orientierende Versuche leicht festgestellt werden. Um die Bildung der gewünschten Teilchen der kleineren Größenklasse zu veranlassen, gibt man nach einer bestimmten, durch einige Versuche zu ermittelnden Zeit, nach der ein Umsatz des gesamten für die Herstellung des Saat-Latexes vorgesehenen Monomeren von etwa 40 bis 65 % erreicht sein soll, eine größere Menge Emulgator zu dem polymerisierenden Ansatz (z.B. 0,2 bis 0,6 % bezogen auf Monomere) hinzu, worauf die gewünschte Bildung der kleineren Teilchen erfolgt. Bei dem zuletzt beschriebenen Verfahren werden die mittleren Durchmesser der beiden Teilchenklassen und ihr Mengenverhältnis durch die Menge an vorgelegtem Emulgator sowie durch den Zeitpunkt und die Menge der zusätzlichen Emulgatorzugabe festgelegt.

Welchem der beiden geschilderten Verfahrensalternativen der Vorzug gegeben wird, ist belanglos bezüglich der erfindungsgemäßen Herstellung von Pasten-PVC. Werden jedoch sehr hohe Anforderungen an die Reproduzierbarkeit der Latex-TGV des Endproduktes gestellt, kann die Herstellung des gewünschten bimodalen Saat-Latexes durch Abmischung

zweier getrennt polymerisierter Latices mit geeigneter Teilchengröße vorteilhafter sein.

Für die Herstellung der Saat-Latices durch diskontinuierliche Emulsionspolymerisation sind im Prinzip alle bekannten Emulgatoren geeignet. Vorteilhaft, aber nicht erforderlich ist es, wenn zur Herstellung der Saat-Latices der gleiche Emulgator verwendet wird, der auch für die Herstellung des Endproduktes vorgesehen ist.

Der Feststoffgehalt der für die Verwendung als Saat geeigneten Latices ist nicht kritisch; aus wirtschaftlichen Gründen wird man jedoch einen möglichst hohen Feststoffgehalt wählen, z.B. 45 bis 50 %.

Als Polymerisationskatalysatoren für das erfindungsgemäße Verfahren kommen alle für Emulsionspolymerisation bekannten wasserlöslichen Radikalbildner in Frage, so z.B. Na-, K-, oder $(NH_4)$-Peroxodisulfat, $H_2O_2$, organische Hydroperoxide oder Ketonperoxide usw. Besonders vorteilhaft läßt sich das erfindungsgemäße Verfahren mit Redox-Katalysatorsystemen durchführen, bei denen zusätzlich zu den oben erwähnten Peroxoverbindungen noch Reduktionsmittel und gegebenenfalls noch zusätzliche Schwermetallsalze und Komplexbildner zugegen sind. Bei der Verwendung wasserlöslicher Reduktionsmittel kann die Peroxokomponente auch monomerlöslich sein, wodurch der Kreis der oben genannten Verbindungen noch beträchtlich erweitert wird (z.B. Diacylperoxide, Peroxodicarbonate, Perester usw.).

Als Emulgatoren bei der Durchführung des erfindungsgemäßen Verfahrens kommen sowohl kationische, nichtionische als auch insbesondere anionische Tenside, wie Alkalimetall- und Ammoniumsalze von Alkylschwefelsäureestern, von Alkyl- sulfonsäuren, von Fettsäuren, von Sulfobernsteinsäureestern und von Alkylarylsulfonsäuren in Mengen von 0,3 bis 3,0 %, bezogen auf Monomere(s) in Betracht. Es ist möglich, auch Mischungen von 2 oder mehr der vorstehend genannten Emulgatoren zu verwenden.

Als weitere Polymerisationshilfsstoffe kommen gegebenenfalls die üblichen Molekulargewichtsregler, wie aliphatische Aldehyde, Chlorkohlenwasserstoffe, z.B. Di- und Trichloräthylen, Chloroform und die Mercaptane in üblichen und wirksamen Mengen in Frage. Ferner sind zu nennen die Puffersalze, die für die Einstellung des pH-Wertes der Polymerisationsmischung in Betracht kommen.

Das erfindungsgemäße Verfahren wird mit der bekannten bzw. üblichen Technik, die von der Emulsions-Polymerisation bekannt ist, bei Temperaturen im Bereich von 40 bis 65°C durchgeführt; bezüglich der anzuwendenden Drucke ist festzuhalten, daß sich diese daraus ergeben, daß die Polymerisation in der Regel in einem geschlossenen Gefäß durchgeführt wird. Der Gesamtdruck ergibt sich durch Addition der Partialdrucke der Reaktionsbestandteile, des Wassers und der Monomeren sowie gegebenenfalls anwesender Inerter. In der Regel wird das erfindungsgemäße Verfahren daher bei Drucken von oberhalb 1 bar durchgeführt, wobei der Anfangsdruck in der Regel höher ist als der Enddruck, d.h. als der Druck, bei dem die Polymerisation in der Regel bis zu einem Umsatz von 80 bis 95 % erfolgt ist.

Herstellung von Saat-Latex A:

In einen mit Blattrührer ausgerüsteten Druckbehälter wurden gefüllt:

0025561

| | |
|---|---|
| 70 | Teile entmineralisiertes Wasser |
| 100 | Teile Vinylchlorid |
| 0,9 | Teile Laurinsäure |
| 0,015 | Teile Kaliumperoxodisulfat |
| 0,005 | Teile 20 %ige wäßrige Ammoniaklösung |
| 0,0002 | Teile Kupfersulfat ($CuSO_4 \cdot 5H_2O$) |
| 0,08 | Teile Natriumformaldehydsulfoxylat |

Die Mischung wurde mit 40 UpM gerührt und auf 52°C aufgeheizt, worauf die Polymerisation einsetzte. Dann wurde mit dem kontinuierlichen Zudosieren von

| | |
|---|---|
| 0,16 | Teilen Kaliumperoxodisulfat in 15 Teilen Wasser |
| 0,26 | Teilen Soda in 15 Teilen Wasser |

begonnen. Nach einer Laufzeit von 8 Stunden war keinerlei Wärmetönung mehr vorhanden; der Behälter wurde entspannt. Es wurde ein Polymerisatlatex mit einem Feststoffgehalt von 45,5 % erhalten, dessen TGV in der Ultrazentrifuge ermittelt wurde, wobei sich folgende Teilchendurchmesser für jeweils 10 %, 50 % und 90 % Massenanteil ergaben:

$$d_{10} = 0,26 \mu$$
$$d_{50} = 0,31 \mu$$
$$d_{90} = 0,38 \mu$$

Herstellung von Saat-Latex B:

In einen mit Blattrührer ausgerüsteten Druckbehälter wurden gefüllt:

60     Teile entmineralisiertes Wasser
40     Teile Vinychlorid
0,9    Teile Laurinsäure
0,1    Teile Kaliumperoxodisulfat
0,18   Teile Natriuhydroxid
0,2    Teile Sorbitanmonolaurat

Die Mischung wurde mit 60 UpM gerührt und auf 55°C aufgeheizt, worauf die Polymerisation einsetzte. Nach einer Laufzeit von 10 Stunden war keinerlei Wärmetönung mehr vorhanden; der Behälter wurde entspannt. Der erhaltene Latex hatte einen Feststoffgehalt von 36,6 %, die TGV ist gekennzeichnet durch

$$d_{10} = 0,039 \mu$$
$$d_{50} = 0,050 \mu$$
$$d_{90} = 0,068 \mu$$

Herstellung von Saat-Latex C:

Nach dem unter A beschriebenen Verfahren wurde ein Saat-Latex hergestellt, dessen TGV durch folgende Durchmesser charakterisiert ist:

$$d_{10} = 0,55 \mu$$
$$d_{50} = 0,63 \mu$$
$$d_{90} = 0,73 \mu$$

der Feststoffgehalt war 47,3 %.

Herstellung von Saat-Latex D:

Nach dem unter B beschriebenen Verfahren wurde ein Saat-Latex hergestellt, dessen TGV durch folgende Durchmesser chrakterisiert ist:

$$d_{10} = 0,12\,\mu$$
$$d_{50} = 0,15\,\mu$$
$$d_{90} = 0,20\,\mu$$

Der Feststoffgehalt war 36,9 %.

Das erfindungsgemäße Verfahren wird anhand der nachstehenden Beispiele erläutert. Alle Angaben über Prozente und Teile beziehen sich, wenn nichts anderes vermerkt ist, auf das Gewicht.

Beispiel 1

Herstellung von Pasten-PVC durch diskontinuierliche Emulsionspolymerisation

In einen mit Blattrührer ausgerüsteten Druckbehälter wurden gefüllt:

| | |
|---|---|
| 63 | Teile entmineralisiertes Wasser |
| 100 | Teile Vinychlorid |
| 4,4 | Teile Latex ($\hat{=}$2,0 Teile, bezogen auf Gesamt-VC) |
| 0,27 | Teile Latex ($\hat{=}$0,1 Teile, bezogen auf Gesamt-VC) |
| 0,08 | Teile Natriumformaldehydsulfoxylat |
| 0,0002 | Teile Kupfersulfat |

Die Mischung wurde mit 80 UpM gerührt und auf 52°C aufgeheizt. Nach Erreichen der Solltemperatur wurde mit dem kontinuierlichen Zudosieren einer Lösung aus 0,1 Teilen Kaliumperoxodisulfat in 18 Teilen Wasser und einer Lösung aus 1,0 Teilen Ammoniumlaurat, in 18 Teilen Wasser, begonnen, worauf die Polymerisation einsetzte. Nach einer Laufzeit von 6 Stunden war keinerlei Wärmetönung mehr vorhanden; der Behälter wurde entspannt. Der erhaltene Latex hatte einen Koagulatanteil von 0,2 % bei einem

0025561

Feststoffgehalt von 48 % und wies eine bimodale TGV auf, deren Maxima nach Untersuchungen mit der Ultrazentrifuge bei 0,32 und 0,95 /u lagen. Im Behälter befand sich nur ein ganz dünner Wandbelag, der sehr leicht zu entfernen war. Der Latex wurde bei einer Trocknerausgangstemperatur von 55°C sprühgetrocknet, das getrocknete PVC-Pulver wurde mit Di-2-äthylhexylphthalat in einem langsam laufenden Mischer im Verhältnis PVC:Weichmacher = 60:40 angesetzt. Die Viskosität der so erhaltenen PVC-Paste wurde in einem Rotations- und einem Kapillarviskosimeter gemessen. Die bei verschiedenen Schergefällen von $10^{-1}$ bis $10^4$ pro Sekunde erhaltenen Viskositätswerte sind in Tabelle 1 aufgeführt; die gesamte, eine leichte Pseudoplastizität aufweisende, Fließkurve weist das Produkt als für den Streich-Verarbeitungsprozeß ausgezeichnet geeignet aus, insbesondere bezüglich der Viskosität bei hohen Schergefällen.

### Beispiel 2

Es wurden. Rezeptur und Verfahren des Beispiels 1 angewandt mit der Ausnahme, daß als Emulgator anstelle von Ammoniumlaurat eine Lösung von 1,0 Teilen Natriumalkylsulfat ($C_{12}$-$C_{18}$-Alkylschnitt) + 0,2 Teilen eines handelsüblichen äthoxylierten Nonylphenols in 18 Teilen Wasser verwendet wurde.

Der erhaltene Latex hatte einen Koagulatanteil von 0,6 % bei einem Feststoffgehalt von 46 % und weist die gleiche bimodale TGV wie der Latex von Beispiel 1 auf. Die Fließkurve der aus dem getrockneten Latex entsprechend Beispiel 1 hergestellten Paste war mit derjenigen der Paste aus Beispiel 1 erhaltenen vergleichbar, wie aus Tabelle 1 hervorgeht.

0025561

## Beispiel 3

In der in Beispiel 2 beschriebenen Weise wurden als Emulgator 1,0 Teile eines sek. Natriumalkylsulfonats ($C_{12}$ bis $C_{18}$-Alkylschnitt) verwendet. Der erhaltene Latex hatte einen Koagulatanteil von 0,15 % bei einem Feststoffgehalt von 48 % bei gleicher TGV. Die Pastenfließkurve hatte den gleichen Verlauf, vgl. Tabelle 1.

## Vergleichsversuche 1 bis 5

Nach dem in Beispiel 1 beschriebenen Verfahren wurden unter Verwendung verschiedener Saat-Latex-Kombinationen 5 Polymerisatlatices hergestellt; die jeweilige Zusammensetzung der Saat-Latices ist in Tabelle 2 enthalten. Als Emulgator wurde jeweils Ammoniumlaurat verwendet..In einer zunächst durchgeführten ersten Versuchsreihe entsprachen die verwendeten Wasser- und VC-Mengen denen von Beispiel 1.

Die dabei erhaltenen Polymerisatlatices wiesen jedoch Feststoffgehalte von nur etwa 40 % auf, hatten einen untragbar hohen Koagulatanteil; außerdem wurden starke PVC-Ablagerungen an den Innenteilen des Polymerisationsbehälters (Wand, Einbauten, Rührer etc). festgestellt.

Auf die Aufarbeitung dieser PVC-Latices wurde aus den vorstehend genannten Gründen verzichtet:

Statt dessen wurde in einer zweiten Versuchsreihe der Anteil an Wasser um 50 % erhöht, worauf koagulatarme Latices mit geringeren Feststoffgehalten resultierten, die in Tabelle 2 aufgeführt sind. Die Latices wurden in gleicher Weise sprühgetrocknet und zu Pasten verarbeitet, deren Viskositäten gemessen wurden. Sämtliche Fließkurven wie-

0025561

šen nicht den erwünschten, leicht pseudoplastischen Verlauf über den gesamten Schergefällebereich auf wie bei den erfindungsgemäß hergestellten Produkten. Dies geht aus dem Vergleich der Tabelle 2 enthaltenen Viskositätswerten mit den Versuchsergebnissen der Beispiele 1 bis 3 von Tabelle 1 hervor.

Elektronenmikroskopische Aufnahmen an den erhaltenen Latices zeigten, daß diese im Gegensatz zu Latices, die nach dem erfindungsgemäßen Verfahren erhalten wurden, einen großen Anteil Latexteilchen von kleiner als $0,1\,\mu$ aufwiesen.

Tabelle 1

| Beispiel | Saat-Latex | | Koagulat-anteil im (%) | Feststoff-gehalt (%) | Viskositäten (Pa.s) bei $D = 1/Sekunde$ | | | | | |
|---|---|---|---|---|---|---|---|---|---|---|
| | 4,4 Teile | 0,27 Teile | | | 0,1 | 1,0 | 10 | 100 | 1000 | 10 000 |
| 1 | A | B | 0,2 | 48 | 22 | 7,5 | 5,5 | 4,5 | 4,0 | 3,5 |
| 2 | A | B | 0,6 | 46 | 20 | 6,0 | 4,2 | 3,4 | 3,0 | 2,7 |
| 3 | A | B | 0,15 | 48 | 8 | 5,5 | 4,0 | 3,5 | 3,0 | 2,8 |

O.Z. 0050/034843

Tabelle 2

| Vergleichs-Versuch-Nr. | Saat-Latex | | Koagulat-anteil im Latex (%) | Feststoff-gehalt (%) | Viskositäten (Pa.s) bei bei D = 1/Sekunde | | | | | |
| --- | --- | --- | --- | --- | --- | --- | --- | --- | --- | --- |
| | Art | Teile | | | 0,1 | 1,0 | 10 | 100 | 1000 | 10000 |
| 1 | A+D | 4,4+0,27 | 0,1 | 37 | 22 | 9 | 7 | 6,3 | 7,5 | ca. 5 |
| 2 | A+D | 2,2+0,022 | 0,6 | 36 | 53 | 28 | 14 | 9 | 8 | ca. 6 |
| 3 | C+A | 2,2+2,2 | 0,35 | 37 | 38 | 20 | 14 | 9 | 8 | ca. 7 |
| 4 | C+A | 2,2+1,3 | 0,4 | 37 | 14 | 5,5 | 4,6 | 13 | 13 | nicht meßbar |
| 5 | C+D | 2,2+2,2 | 0,15 | 38 | 28 | 16 | 12 | 14 | 17 | ca.13 |

0025561

# Patentanspruch

Verfahren zur diskontinuierlichen Polymerisation von Vinylchlorid oder Mischungen von Vinylchlorid mit bis zu
30 Gew.% an copolymerisierbaren Monomeren in Emulsion
unter Verwendung von

a)    mindestens einem wasserlöslichen Starter

b)    mindestens einem Emulgator und gegebenenfalls

c)    weiteren Polymerisationshilfsstoffen und in Anwesenheit

d)    eines durch Emulsionspolymerisation erzeugten PVC-
-Saatlatex, der Teilchen mit einem mittleren Durchmesser im Bereich von 0,12 bis 0,6 $\mu$m aufweist,

dadurch gekennzeichnet, daß die Polymerisation in Gegenwart eines weiteren, in Emulsion erzeugten Saatlatex e)
durchgeführt wird, der in einem Anteil von 0,05 bis
0,5 %, bezogen auf Monomere(s), zugegen ist und einen
mittleren Teilchendurchmesser im Bereich von 0,02 bis
0,08 $\mu$m ($d_{50}$-Wert der Masseverteilung) aufweist und wobei
der Saatlatex d) in einem Anteil von 0,5 bis 5 %, bezogen
auf Monomere(s), angewendet wird und einen mittleren
Teilchendurchmesser im Bereich von 0,20 bis 0,40 ($d_{50}$-Wert
der Masseverteilung) aufweist.

Europäisches
Patentamt

**EUROPÄISCHER RECHERCHENBERICHT**

0025561

Nummer der Anmeldung

EP 80 10 5273

| Kategorie | EINSCHLÄGIGE DOKUMENTE | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| D | GB - A - 928 556 (MONTECATINI)<br>* Ansprüche 1-3; Beispiele * | 1 | C 08 F 259/04<br>14/06 |
| A | FR - A - 2 286 152 (PLASTIMER) | | |

**RECHERCHIERTE SACHGEBIETE (Int. Cl.³)**

C 08 F 259/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-12-1980 | MEULEMANS |

EPA form 1503.1 06.78